# EUROPÄISCHE PATENTSCHRIFT

(11) **EP 4 079 681 B1**
(45) Veröffentlichungstag und Bekanntmachung des Hinweises auf die Patenterteilung: **18.12.2024**
(21) Anmeldenummer: 22168396.4
(22) Anmeldetag: 14.04.2022
(51) Int. Cl.: C01B 3/00, B01J 8/02, B01J 8/16, B01J 8/08, C01B 3/22

(54) **VERFAHREN UND VORRICHTUNG ZUM KATALYTISCHEN FREISETZEN EINES GASES AUS EINEM TRÄGERMATERIAL**
METHOD AND DEVICE FOR CATALYTICALLY RELEASING A GAS FROM A CARRIER MATERIAL
PROCÉDÉ ET DISPOSITIF DE LIBÉRATION CATALYTIQUE D'UN GAZ À PARTIR D'UNE MATIÈRE PORTEUSE

(30) Priorität: 19.04.2021 DE 102021203887
(43) Veröffentlichungstag der Anmeldung: 26.10.2022
(73) Patentinhaber: HYDROGENIOUS LOHC TECHNOLOGIES GMBH, 91058 Erlangen (DE)
(72) Erfinder: Weiß, Alexander, 91096 Möhrendorf (DE); Paetz, Caspar, 91054 Erlangen (DE); Büch, Holger, 91056 Erlangen (DE); Seidel, Alexander, 91052 Erlangen (DE); Hestermann, Ines, 91301 Forchheim (DE); Bösmann, Andreas, 90542 Eckental (DE); Wasserscheid, Peter, 91054 Erlangen (DE); Preuster, Patrick, 91180 Heideck (DE); Grauert, Maximilian, 90443 Nürnberg (DE); Kadar, Julian, 91054 Erlangen (DE); Solymosi, Thomas, 91052 Erlangen (DE); Thommes, Matthias, 96250 Ebensfeld (DE)
(74) Vertreter: Rau, Schneck & Hübner Patentanwälte Rechtsanwälte PartGmbB

(56) Entgegenhaltungen:
- DE-A1- 102015 219 305
- RU-C1- 2 671 732
- US-A- 5 935 277

## Beschreibung

Die vorliegende Patentanmeldung nimmt die Priorität der deutschen Patentanmeldung DE 10 2021 203 887.5 in Anspruch, deren Inhalt durch Bezugnahme hierin aufgenommen wird.

Die Erfindung betrifft ein Verfahren und eine Vorrichtung zum katalytischen Freisetzen eines Gases aus einem Trägermaterial.

RU 261 732 C1 offenbart ein Verfahren zur Herstellung von Alkoxysilanen.

Aus DE 10 2015 219 305 A1 ist eine Vorrichtung zum katalytischen Freisetzen von Wasserstoffgas aus einem Wasserstoffträgermaterial bekannt. Für die Freisetzungsreaktion ist ein Katalysator erforderlich. Untersuchungen haben gezeigt, dass die Aktivität des Katalysators mit zunehmender Nutzung abnimmt. Insbesondere kann die Aktivität des Katalysators auf einen Wert zwischen 2 % und 80 % bezogen auf die Initialaktivität eines frischen Katalysators reduziert werden. In Folge des Aktivitätsverlusts sinkt die Reaktorleistung. Die volumetrische und gravimetrische Leistungsdichte bei der Wasserstofffreisetzung sind reduziert und dadurch ist die technische Leistungsfähigkeit vermindert.

Der Erfindung liegt die Aufgabe zugrunde, das katalytische Freisetzen eines Gases aus einem Trägermaterial zu verbessern, insbesondere die Leistungsfähigkeit zu steigern und insbesondere die volumetrische und/oder gravimetrische Leistungsdichtung bei der Freisetzungsreaktion zu steigern. Diese Aufgabe ist erfindungsgemäß gelöst durch ein Verfahren mit den Merkmalen des Anspruchs 1 sowie durch eine Vorrichtung mit den Merkmalen des Anspruchs 9.

Der Kern der Erfindung besteht darin, dass Katalysatorteilchen eines Katalysatormaterials, insbesondere stoßartig, bewegt und dadurch reaktiviert werden. Es wurde gefunden, dass die Abnahme der Leistungsfähigkeit des Katalysatormaterials dadurch begründet sein kann, dass sich das Katalysatormaterial, insbesondere Poren des Katalysatormaterials, mit flüssigem Trägermaterial füllen und dadurch die Freisetzung von Gas behindert ist. Insbesondere wurde gefunden, dass der Kapillardruck in den Poren so hoch ist, dass eine Blasenbildung, die für das Freisetzen des Gases aus dem Trägermaterial erforderlich ist, und/oder dass in den Poren gebildete Gasblasen die Flüssigkeit nicht verdrängen können. Die Flüssigkeit verbleibt in einem von den Katalysatorteilchen gebildeten Porennetzwerk.

Es wurde überraschend gefunden, dass das Katalysatormaterial reaktiviert werden kann, indem die Katalysatorteilchen in dem Reaktorgehäuse, insbesondere gezielt, bewegt werden. Insbesondere werden die Katalysatorteilchen relativ zu dem Reaktorgehäuse bewegt. Insbesondere wird zumindest ein Teil der Katalysatorteilchen, insbesondere mindestens 10 % der Katalysatorteilchen, insbesondere mindestens 20 % der Katalysatorteilchen, insbesondere mindestens 50 % der Katalysatorteilchen und insbesondere mindestens 70 % der Katalysatorteilchen in dem Reaktorgehäuse bewegt. Vorteilhaft ist es, wenn möglichst viele und insbesondere alle Katalysatorteilchen bewegt werden, um eine möglichst vollständige Reaktivierung des Katalysatormaterials zu bewirken. Durch die Bewegung wird eine metastabile Gas-Flüssigkeits-Verteilung im Porennetzwerk der Katalysatorteilchen schlagartig verändert. Gasblasen aus dem gelösten Gas können nukleieren und die Gasblasen, die sich im Inneren der Katalysatorteilchen befinden und/oder dort produziert werden, können, insbesondere ungehindert, nach außen gelangen.

Untersuchungen haben gezeigt, dass durch die Reaktivierung der Katalysatorteilchen die Aktivität auf über 90 % bezogen auf die Initialaktivität von frischem Katalysatormaterial gesteigert werden kann, insbesondere auf mindestens 95 % der Initialaktivität, insbesondere auf mindestens 98 % der Initialaktivität, insbesondere auf mindestens 99 % der Initialaktivität und insbesondere auf 100 % der Initialaktivität.

Insbesondere kann das Bewegen der Katalysatorteilchen unter Bedingungen stattfinden, bei denen die Katalysatorteilchen eine vergleichsweise geringere Reaktionsgeschwindigkeit aufweisen, insbesondere bei reduzierten Reaktionstemperaturen, bei einer reduzierten Beladung der Katalysatorteilchen mit katalytisch aktivem Material und/oder bei einem reduzierten Hydriergrad des Trägermaterials.

Die reduzierte Reaktionstemperatur beträgt insbesondere höchstens 300 °C, insbesondere höchstens 270 °C, insbesondere höchstens 250 °C und insbesondere höchstens 200 °C. Die reduzierte Beladung der Katalysatorteilchen mit katalytisch aktivem Material, also eine reduzierte katalytische Edelmetallbeladung beträgt höchstens 1 Gew.-% bezogen auf einen Katalysatorträger, insbesondere höchstens 0,5 Gew.-%, insbesondere höchstens 0,3 Gew.-% und insbesondere höchstens 0,1 Gew.-%. Der reduzierte Hydriergrad des Trägermaterials beträgt insbesondere höchstens 80 %, insbesondere höchstens 60 % und insbesondere höchstens 40 %.

Insbesondere kann das Bewegen der Katalysatorteilchen unter Bedingungen stattfinden, bei denen die Katalysatorteilchen eine vergleichsweise geringe Reaktionsgeschwindigkeit aufweisen, insbesondere bei reduzierten Reaktionstemperaturen, bei einer reduzierten Beladung der Katalysatorteilchen mit katalytisch aktivem Material und/oder bei einem reduzierten Hydriergrad des Trägermaterials.

Insbesondere wurde gefunden, dass die Wirkung des Bewegens zur Reaktivierung der Katalysatorteilchen für einen vergleichsweise langen Zeitraum wirkt, insbesondere mindestens zehn Minuten. Dies gilt insbesondere dann, wenn das Trägermaterial noch eine ausreichende Menge an chemisch gebundenem Gas aufweist. Insbesondere beträgt der Hydriergrad des Trägermaterials insbesondere noch mindestens 10 %, insbesondere noch mindestens 20 % und insbesondere noch mindestens 30 %. Der Aufwand, insbesondere für Wiederholungen des Bewegens der Katalysatorteilchen, ist reduziert. Das Bewegen der Katalysatorteilchen bewirkt eine nachhaltige Reaktivierung der Katalysatorteilchen.

Es wurde gefunden, dass das Verfahren besonders vorteilhaft für ein Wasserstoffträgermaterial geeignet ist. Wasserstoff kann an dem Wasserstoffträgermaterial reversibel chemisch gebunden und wieder freigesetzt werden. Ein derartiges Wasserstoffträgermaterial ist insbesondere ein flüssiges organisches Wasserstoffträgermedium (LOHC). Als besonders geeignet hat sich ein Trägermaterial erwiesen, das in einer zumindest teilweise mit Wasserstoff beladenen Form als Perhydro-Dibenzyltoluol (H₁₈DBT), Perhydro-Benzyltoluol (H₁₂BT) und/oder Dicyclohexan vorliegt. Möglich ist auch die Verwendung einer Mischung von Trägermaterial in der zumindest teilweise mit Wasserstoff beladenen Form von Perhydro-Diphenylmethan und Perhydro-Biphenyl. Diese Verbindungen können zu Diphenylmethan und Biphenyl dehydriert werden. Besonders vorteilhaft ist eine Mischung von Biphenyl zu Diphenylmethan in einem Verhältnis von 30:70, insbesondere 35:65 und insbesondere 40:60.

Das Katalysatormaterial weist ein Metall auf, insbesondere Platin, Palladium, Nickel, Rhodium und/oder Ruthenium. Das Katalysatormaterial ist insbesondere an einem Katalysatorträger angeordnet und insbesondere daran befestigt. Als Katalysatorträger dient insbesondere Aluminiumoxid, Siliziumoxid, Titanoxid und/oder Zirkonoxid. Insbesondere ist der Katalysatorträger ein poröser oxidischer Träger. Das Material des Katalysatorträgers weist Poren auf mit einem Durchmesser von mindestens 10 nm, insbesondere mindestens 20 nm, insbesondere mindestens 50 nm und insbesondere mindestens 100 nm. Es wurde gefunden, dass die Blasenbildung innerhalb der Poren dadurch forciert werden kann. Der Katalysatorträger ist insbesondere inert. Der Gewichtsanteil des Katalysatormaterials beträgt bezogen auf den Katalysatorträger zwischen 0,1 % bis 10 %.

Das Katalysatormaterial umfasst eine Vielzahl von Katalysatorteilchen, insbesondere Katalysatorträgerteilchen, die insbesondere als Pellets vorliegen. Die Katalysatorteilchen weisen eine mittlere Teilchengröße von 0,5 mm bis 10 mm, insbesondere von 1 mm bis 8 mm und insbesondere von 2 mm bis 4 mm auf.

Die Katalysatorteilchen sind insbesondere in Form eines Festbettes angeordnet, das von dem Trägermaterial, das insbesondere flüssig ist, durchströmt wird.

Insbesondere wurde gefunden, dass das Verfahren eine dauerhaft hohe volumetrische Leistungsdichte beim Freisetzen des Gases ermöglicht. Durch das Verfahren wird LOHC als Trägermaterial mit einer hohen volumetrischen Leistungsdichte ertüchtigt. Das erfindungsgemäße Verfahren und die erfindungsgemäße Vorrichtung sind für die Anwendung im Mobilitätsbereich, also beispielsweise zum Freisetzen von Wasserstoffgas in einem Fahrzeug, insbesondere einem Schiff, einem Zug, einem LKW und/oder einem PKW, geeignet. Das Verfahren weist insbesondere eine volumetrische Leistungsdichte von mindestens 400 kW/m³, insbesondere mindestens 600 kW/m³, mindestens 800 kW/m³ und insbesondere mindestens 1000 kW/m³ auf.

Ein Verfahren, bei dem das Bewegen der Katalysatorteilchen zeitlich gesteuert nach Ablauf eines veränderlich festlegbaren Zeitintervalls erfolgt, ermöglicht das gezielte Reaktivieren des Katalysatormaterials. Ein hierfür erforderliches Zeitintervall kann insbesondere veränderlich festgelegt werden. Das Zeitintervall beträgt beispielsweise zehn Minuten.

Ein Verfahren gemäß Anspruch 2 ermöglicht eine unkomplizierte Umsetzung der Bewegung der Katalysatorteilchen. Ein mechanischer Impuls auf die Katalysatorteilchen kann mittels eines Stellelements aufgebracht werden. Insbesondere beträgt der mechanische Impuls mindestens 0,05 Ns, insbesondere 0,1 Ns, insbesondere 0,2 Ns, insbesondere mindestens 0,3 Ns und insbesondere mindestens 0,5 Ns. Ein spezifischer, auf die Masse der Katalysatorteilchen bezogener mechanischer Impuls beträgt insbesondere mindestens 1,0 x 10³ m/s, insbesondere mindestens 5,0 x 10³ m/s, insbesondere 1,0 x 10⁴ m/s, insbesondere 5,0 x 10⁴ m/s und insbesondere 1,0 x 10⁵ m/s.

Das Stellelement stellt eine, insbesondere lineare, Stellbewegung zur Verfügung, die unmittelbar auf das Katalysatormaterial übertragen wird und zu einer Bewegung der Katalysatorteilchen führt. Das Stellelement ist insbesondere ein Stoßgenerator, der insbesondere mittels eines Aktors die für die Bewegung erforderliche Kraft zur Verfügung stellt. Der Aktor ist beispielsweise ein hydraulischer, pneumatischer und/oder elektrischer Linearaktor, insbesondere ein Hydraulikzylinder, ein Pneumatikzylinder und/oder ein elektrisch betriebener Spindeltrieb. Das Stellelement kann auch als Piezo-Stoßgenerator und/oder als Ultraschallsonde ausgeführt sein. Es ist insbesondere denkbar, mehrere Stellelemente zu verwenden, die insbesondere an einer Außenseite der Schüttung der Katalysatorteilchen und/oder in der Schüttung der Katalysatorteilchen, insbesondere zumindest teilweise, angeordnet sind. Die Piezo-Stoßgeneratoren werden insbesondere durch Induktion angetrieben. Es wurde gefunden, dass die bei dem Betrieb der Piezo-Stoßgeneratoren erzeugte Wärme vorteilhaft für die endotherme Freisetzungsreaktion genutzt werden kann.

Das Katalysatormaterial, insbesondere das Festbett, ist in einem Katalysatorbehälter angeordnet, der in dem Reaktorgehäuse angeordnet ist. Der Katalysatorbehälter kann in dem Reaktorgehäuse befestigt sein, so dass eine Bewegung des Reaktorgehäuses unmittelbar eine Bewegung des Katalysatorbehälters bewirkt. Es ist alternativ möglich, den Katalysatorbehälter derart in dem Reaktorgehäuse anzuordnen, dass eine Relativbewegung des Katalysatorbehälters innerhalb des Reaktorgehäuses, insbesondere entlang einer Raumrichtung, möglich ist. Der Katalysatorbehälter kann in dem Reaktorgehäuse beispielsweise auf einer Gleitebene, einer Gleitbahn oder auf einer Schienenführung angeordnet sein.

Der Katalysatorbehälter ist insbesondere umfangsseitig geschlossen, so dass das Katalysatormaterial zuverlässig in dem Katalysatorbehälter gehalten ist. Ein unbeabsichtigtes Austreten des Katalysatormaterials aus dem Katalysatorbehälter ist verhindert. Der Katalysatorbehälter kann beispielsweise kubisch oder zylindrisch ausgeführt sein. Es sind auch andere Formen für den Katalysatorbehälter möglich. Vorteilhaft ist eine Ausgestaltung, bei der der Katalysatorbehälter eine Behälterlängsachse aufweist und bezüglich der Behälterlängsachse hohlprofilförmig ausgeführt ist, wobei die Kontur der Profilgeometrie auch dreieckförmig, fünfeckförmig oder sechseckförmig ausgeführt sein kann.

Der Katalysatorbehälter weist mindestens eine Seitenwand auf, die insbesondere bereichsweise fluiddurchlässig ausgeführt ist. Dadurch ist gewährleistet, dass das Trägermaterial und/oder das freigesetzte Gas dem Katalysatorbehälter zu- und aus dem Katalysatorbehälter abgeführt werden können.

Ein mechanischer Impuls kann zusätzlich oder alternativ mittels einer Impulsquelle aufgebracht werden. Die Impulsquelle kann beispielsweise ein Fahrzeug sein, an oder in dem die Vorrichtung angebracht ist und an dem das Verfahren durchgeführt wird. Die Impulsquelle ist also insbesondere eine bewegte Plattform, insbesondere ein Schiff, ein Zug, ein Bus, ein LKW oder ein PKW. Fahrbewegungen der Plattform werden unmittelbar auf das Reaktorgehäuse und auf das darin angeordnete Katalysatormaterial übertragen. Fahrbewegungen können durch Beschleunigungs- und/oder Abbremsmanöver und/oder Lenkbewegungen verursacht werden. Eine derartige Ausführung ist besonders unaufwändig, da insbesondere zusätzliche Stellelemente zum Aufbringen der Bewegung entbehrlich sind.

Die Impulsquelle kann auch durch ein Kraftspeicherelement ausgeführt sein. Das Kraftspeicherelement kann beispielsweise mindestens ein mechanisches Federelement aufweisen, beispielsweise eine Blattfeder und/oder eine Schraubenfeder. Bei dieser Ausführung kann das Reaktorgehäuse und/oder der Katalysatorbehälter auf einer Schienenanordnung, einer Gleitebene oder einer Gleitbahn angebracht sein. Das Reaktorgehäuse und/oder der Katalysatorbehälter sind in diesem Fall mit dem Kraftspeicherelement mechanisch gekoppelt. Eine Fahrbewegung bewirkt in diesem Fall eine Verlagerung des Reaktorgehäuses und/oder des Katalysatorbehälters aufgrund der Massenträgheit entlang der Schienenrichtung, entlang der Gleitbahn oder auf der Gleitebene, wobei durch das Kraftspeicherelement gewährleistet ist, dass nach Beendigung der Fahrbewegung das Reaktorgehäuse und/oder der Katalysatorbehälter in seine ursprüngliche Position zurückverlagert wird. Diese Zurückverlagerung bewirkt dann die Bewegung der Katalysatorteilchen in dem Reaktorgehäuse. Das Kraftspeicherelement stellt einen Rückstellmechanismus dar.

In die Schüttung der Katalysatorteilchen können Füllkörper zugegeben werden. Die Füllkörper sind insbesondere hinsichtlich der katalytischen Freisetzungsreaktion nicht reaktiv. Die Füllkörper weisen eine Geometrie auf, die sich von der Geometrie der Katalysatorteilchen unterscheidet. Die Füllkörper dienen als Prallkörper innerhalb der Schüttung der Katalysatorteilchen, wodurch die Anzahl der Stöße der einzelnen Teilchen innerhalb der Katalysatorschüttung erhöht werden kann. Die Effizienz der Bewegung der Katalysatorteilchen wird dadurch erhöht. Der mittlere Teilchendurchmesser der Füllkörper ist insbesondere größer als der mittlere Teilchendurchmesser der Katalysatorteilchen. Die Füllkörper sind insbesondere aus Keramik oder Metall, insbesondere Edelstahl, hergestellt. Die Geometrie der Füllkörper ist insbesondere hohl und insbesondere rohrförmig.

Als Impulsquelle kann auch ein motorischer Antrieb, insbesondere ein Elektromotor und/oder ein Verbrennungsmotor, eine Pumpe, insbesondere eine Flüssigkeitspumpe, und/oder ein Kompressor dienen. Derartige Komponenten sind insbesondere ohnehin an der mobilen Plattform vorhanden und emittieren mechanische Schwingungen und/oder Vibrationen, die zum Bewegen der Katalysatorteilchen auf das Reaktorgehäuse und/oder den Katalysatorbehälter übertragen werden können. Die Übertragung der mechanischen Schwingungen erfolgt vorteilhaft über die bewegte Plattform selbst, insbesondere ein Fahrgestell oder einen Rahmen der bewegten Plattform. Zusätzlich oder alternativ können mechanische Kopplungselemente vorgesehen sein.

Ein Verfahren nach Anspruch 3 vereinfacht die gezielte Bewegung der Katalysatorteilchen. Mittels eines Förderelements können die Katalysatorteilchen des Katalysatormaterials gefördert werden, insbesondere innerhalb des Reaktorgehäuses und insbesondere innerhalb des Katalysatorbehälters. Das Förderelement ermöglicht insbesondere eine kontinuierliche Förderung des Katalysatormaterials. Das Förderelement kann auch zur intermittierenden Förderung genutzt werden, also zeitlich abwechselnden Phasen, in welchen eine Förderung stattfindet und eine Förderung unterbleibt. Die intermittierende Förderung ist diskontinuierlich. Das Förderelement dient insbesondere zum Umwälzen und/oder Verteilen des Katalysatormaterials. Ein Förderelement ist beispielsweise eine umwälzende Schnecke und/oder ein Rührwerk. Die Förderung erfolgt insbesondere derart, dass das Katalysatormaterial, also die gesamte Masse des Katalysatormaterials, innerhalb einer veränderlich vorgebbaren Zeitspanne umgewälzt wird. Insbesondere beträgt diese Zeitspanne höchstens 5 min, insbesondere höchstens 3 min, insbesondere höchstens 2 min und insbesondere höchstens 1 min.

Ein Verfahren gemäß Anspruch 4 ist mechanisch unaufwändig. Es wurde gefunden, dass eine Bewegung der Katalysatorteilchen auch, insbesondere ausschließlich, mittels einer, insbesondere gezielten, Druckänderung im Reaktorgehäuse, insbesondere innerhalb des Katalysatorbehälters, erfolgen kann. Durch die gezielte Aufbringung von Druckänderungen werden Druckimpulse auf das Katalysatormaterial ausgeübt, die zu einem Freisetzen der Gasblasen aus den Poren der Katalysatorteilchen führen. Beispielsweise wird eine Druckerhöhung um mindestens 1,0 bar, insbesondere mindestens 1,5 bar, insbesondere mindestens 2,0 bar und insbesondere 2,5 bar innerhalb einer festlegbaren Zeitspanne aufgebracht. Diese Zeitspanne beträgt insbesondere höchstens 1 s, insbesondere höchstens 800 ms und insbesondere höchstens 500 ms und insbesondere höchstens 300 ms und insbesondere höchstens 100 ms. Die Druckerhöhung erfolgt insbesondere durch Zuführen eines Druckgases, insbesondere von Wasserstoffgas und/oder einem Inertgas und anschließender Druckentlastung beispielsweise mittels eines entsprechenden Ventils. Ein Druckimpuls kann auch durch eine Druckerniedrigung erfolgen, insbesondere mittels eines entsprechenden Ventils, um eine Druckentlastung zu bewirken, um anschließend eine erneute Druckerhöhung infolge des Reaktionsgeschehens zu erzielen.

Ein Verfahren gemäß Anspruch 5 ermöglicht, eine zeitliche Steuerung, mit der das Bewegen der Katalysatorteilchen wiederholt wird, unkompliziert durchzuführen.

Ein Verfahren gemäß Anspruch 6 optimiert die Reaktivierung des Katalysatormaterials. Insbesondere wurde gefunden, dass Parameter des Verfahrens selbst genutzt werden können, um die Reaktivierung des Katalysatormaterials durch Bewegung zu veranlassen. Ein Parameter kann beispielsweise die Anzahl der Betriebsvorgänge und/oder Betriebsstunden sein, die das Katalysatormaterial genutzt wird. Ein Parameter des Verfahrens kann auch die Aktivität des Katalysatormaterials sein, wobei insbesondere bei Erreichen oder Unterschreiten einer Mindest-Aktivität das Bewegen des Katalysatormaterials initiiert wird. Dazu kann ein Sensor, der insbesondere die Aktivität des Katalysatormaterials erfasst, mit einer Steuerungs-/Regelungseinheit in Signalverbindung stehen. Die Steuerungs-/Regelungseinheit ist insbesondere mit dem Bewegungselement in Signalverbindung und erzeugt ein entsprechendes Stellsignal, wenn beispielsweise der Mindestwert für die Aktivität des Katalysatormaterials erreicht wird. Das Verfahren kann insbesondere automatisiert und insbesondere vollständig automatisiert, geregelt, durchgeführt werden.

Dazu kann beispielsweise die Menge an freigesetztem Wasserstoffgas gemessen werden. Zusätzlich oder alternativ kann der Hydriergrad des zumindest teilweise dehydrierten Trägermaterials gemessen werden, Zusätzlich oder alternativ kann auch die Heizleistung, insbesondere die Abnahme der Heizleistung gemessen werden, die für die Aufrechterhaltung der erforderlichen Reaktionstemperatur in dem Dehydrierreaktor zugeführt wird.

Ein Verfahren gemäß Anspruch 7 ermöglicht eine zusätzliche Steigerung der volumetrischen Leistungsdichte. Ein derartiges Verfahren weist eine verbesserte Effizienz auf. Es wurde gefunden, dass es vorteilhaft ist, das Katalysatormaterial im Reaktorgehäuse, insbesondere unmittelbar, mittels mindestens eines oder mehrerer Wärmeelemente zu erwärmen. Dazu dient insbesondere ein Wärmerohr, das insbesondere innerhalb des Reaktorgehäuses und insbesondere zumindest teilweise unmittelbar von dem Katalysatormaterial umgeben ist. Insbesondere ist das Wärmeelement in dem Katalysatormaterial eingebettet. Das Wärmeelement kann auch plattenförmig ausgeführt sein.

Ein Verfahren gemäß Anspruch 8 ermöglicht eine besonders effiziente Wärmeübertragung von dem Wärmeelement auf das Katalysatormaterial.

Insbesondere ist es möglich, die Effizienz der Wärmeübertragung bei kompakter Bauweise des Reaktorgehäuses zu erhöhen. Die volumetrische Leistungsdichte ist zusätzlich erhöht.

Eine Vorrichtung gemäß Anspruch 9 weist im Wesentlichen die Vorteile des Verfahrens gemäß Anspruch 1 auf, worauf hiermit verwiesen wird.

Bewegungselemente, insbesondere das Stellelement und/oder die Impulsquelle, die unmittelbar mit dem Katalysatormaterial und/oder mit dem Katalysatorbehälter gekoppelt sind, können mittels hülsenartiger Kanäle von außerhalb des Reaktorgehäuses zu dem Katalysatormaterial geführt werden. Die hülsenartigen Kanäle sind entsprechend abgedichtet. Die erfindungsgemäße Vorrichtung weist insbesondere eine Zuführöffnung zum Zuführen des Trägermaterials und eine Abführöffnung zum Abführen des freigesetzten Gases und/oder des Trägermaterials auf. Eine Fluidströmungsrichtung, insbesondere des Trägermaterials durch das Reaktorgehäuse, ist von der Zuführöffnung zu der Abführöffnung hin orientiert.

Die Vorrichtung weist eine Steuerungs-/Regelungseinheit auf, die mit dem Bewegungselement in Signalverbindung steht.

Ein Sensor ermöglicht die Erfassung eines Betriebszustands der Vorrichtung, um eine sensorgesteuerte Reaktivierung des Katalysatormaterials zu initiieren. Dazu steht der Sensor mit der Steuerungs-/Regelungseinheit in Signalverbindung. Als Sensor kann auch ein Zeitsensor dienen, der eine zeitgesteuerte Bewegung des Katalysatormaterials veranlasst.

Die Ausführung des Bewegungselements gemäß einem der Ansprüche 10 bis 12 ermöglicht die Vorteile gemäß den Ansprüchen 2 bis 4.

Eine Vorrichtung gemäß Anspruch 13 oder 14 ermöglicht die Vorteile des Verfahrens gemäß Anspruch 7 oder 8, worauf hiermit verwiesen wird. Als Wärmeelement dient insbesondere ein Wärmeübertragungsrohr, das von einem Wärmeübertragungsmedium durchströmt wird. Die Erwärmung des Wärmeübertragungsmediums findet insbesondere außerhalb des Reaktorgehäuses statt. Als Wärmeübertragungsmedium dient insbesondere Thermalöl.

Zusätzlich oder alternativ kann in dem Wärmeübertragungsrohr eine Wasserstoffverbrennung, insbesondere eine katalytische Wasserstoffverbrennung, stattfinden. Insbesondere kann an der Rohrinnenfläche des Wärmeübertragungsrohrs ein Katalysator angebracht sein, der die Wasserstoffverbrennung begünstigt. Als vorteilhaft hat sich eine Schüttung von Katalysatorteilchen und/oder eine Beschichtung der Rohrinnenflächen erwiesen. Als Katalysatormaterial dient insbesondere Platin und/oder Palladium.

Anstelle des Wasserstoffs kann in dem Wärmeüberragungsrohr auch ein anderer Kraftstoff, insbesondere Biomethan, Bioethanol, Propan und/oder Butan, verbrannt werden.

Zur Wärmeerzeugung kann in dem Wärmeübertragungsrohr des Wärmeelements auch eine katalytische Oxidation, insbesondere eines Trägermaterials und insbesondere eines Wasserstoffträgermaterials, insbesondere des Wasserstoffträgermaterials, das aus dem Reaktorgehäuse abgeführt worden ist, dienen. Die katalytische Oxidationsreaktion ist insbesondere eine partielle Oxidationsreaktion, die insbesondere ohne Freisetzung von Kohlenstoffdioxid (CO₂) durchgeführt wird. Dadurch wird erreicht, dass durch die Oxidationsreaktion der Anteil an Kohlenstoffdioxid nicht zusätzlich erhöht wird.

Wesentlich ist, dass die jeweilige Längsachse der Wärmeelemente quer, insbesondere senkrecht, zu der Fluidströmungsrichtung des Trägermaterials orientiert ist. Ein Neigungswinkel zwischen der Längsachse eines Wärmeelements und der Fluidströmungsrichtung ist mindestens 60 °, insbesondere mindestens 70 °, insbesondere mindestens 80 °, insbesondere mindestens 85 ° und insbesondere 90 °.

Zusätzlich oder alternativ kann das mindestens eine Wärmelement auch als elektrisches Heizelement, insbesondere durch Heizwiderstand und/oder Induktion, ausgeführt sein.

Sowohl die in den Patentansprüchen angegebenen Merkmale als auch die in den Ausführungsbeispielen einer erfindungsgemäßen Anlage angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Darstellung einer erfindungsgemäßen Vorrichtung gemäß einem ersten Ausführungsbeispiel mit lose angeordnetem Katalysatormaterial,
- Fig. 2: eine Fig. 1 entsprechende Darstellung einer Vorrichtung gemäß einem zweiten Ausführungsbeispiel mit einem Katalysatorbehälter,
- Fig. 3: eine schematische Darstellung der Anordnung eines Wärmeelements in einem Reaktorgehäuse,
- Fig. 4: eine geschnittene perspektivische Ansicht einer Vorrichtung mit mehreren Wärmeelementen,
- Fig. 5: eine schematische Längsschnittdarstellung einer Vorrichtung gemäß einem dritten Ausführungsbeispiel, und
- Fig. 6: eine Schnittdarstellung gemäß Schnittlinie VI-VI in Fig. 5.

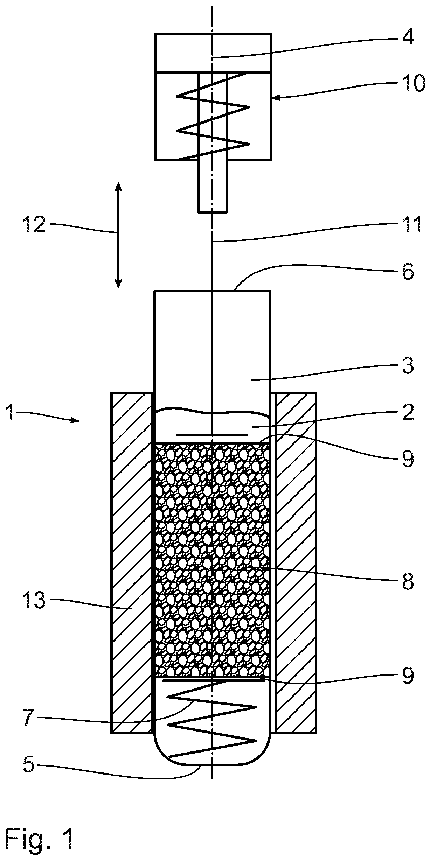

Eine in Fig. 1 als Ganzes mit 1 gekennzeichnete Vorrichtung dient zum Freisetzen von Wasserstoffgas H₂ aus einem flüssigen organischen Wasserstoffträgermedium als Trägermaterial. Das Wasserstoffträgermedium wird auch als LOHC bezeichnet. Gemäß dem gezeigten Ausführungsbeispiel dient als Wasserstoffträgermedium Perhydro-Dibenzyltoluol. Das Trägermaterial 2 ist eine Flüssigkeit.

Die Vorrichtung 1 umfasst ein Reaktorgehäuse 3, das gemäß dem gezeigten Ausführungsbeispiel im Wesentlichen zylinderförmig ausgeführt ist und eine Gehäuse-Längsachse 4 aufweist. Das Reaktorgehäuse 3 ist an seinem, in Fig. 1 unteren Ende durch einen Gehäuseboden 5 verschlossen. An dem in Fig. 1 oberen Ende weist das Reaktorgehäuse 2 eine Öffnung 6 auf. Die Öffnung 6 dient zum Zuführen des Trägermaterials 2 in das Reaktorgehäuse 3 sowie zum Abführen des Trägermaterials 2 und des freigesetzten Wasserstoffgases aus dem Reaktorgehäuse 3. Die Öffnung 6 bildet eine Zuführöffnung und eine Abführöffnung.

Am Gehäuseboden 5 ist ein Kraftspeicherelement 7 angeordnet, das gemäß dem gezeigten Ausführungsbeispiel durch Stahlwolle ausgeführt ist. Das Kraftspeicherelement 7 kann auch durch ein mechanisches Federelement, insbesondere eine Schraubenfeder oder eine Blattfeder, ausgeführt sein.

In dem Reaktorgehäuse 3 ist Katalysatormaterial 8 in Form einer Schüttung angeordnet. Das Katalysatormaterial 8 umfasst eine Vielzahl von Katalysatorteilchen, die Katalysatorträgermaterial aufweisen. Das Katalysatorträgermaterial 8 ist durch poröse Aluminiumoxid-Pellets gebildet, die mit Platin als Katalysatormaterial imprägniert sind.

Das Katalysatormaterial 8 ist zwischen zwei Begrenzungsscheiben 9 lose angeordnet, die insbesondere als Lochscheiben ausgeführt sind. Die beiden Begrenzungsscheiben 9 sind nicht miteinander verbunden. Die Begrenzungsscheiben 9 sind unabhängig voneinander in dem Reaktorgehäuse 3 angeordnet. Über die untere, dem Gehäuseboden 5 zugewandte Begrenzungsscheibe 9 ist das Katalysatormaterial 8 an dem Kraftspeicherelement 7 axial abgestützt.

Das Katalysatormaterial 8 ist vollständig innerhalb des Trägermaterials 2 angeordnet. Insbesondere ist der Pegelstand des flüssigen Trägermaterials 2 oberhalb der oberen Begrenzungsscheibe 9 angeordnet.

Die Vorrichtung 1 umfasst ein Bewegungselement in Form eines Stellelements 10. Das Stellelement 10 ist als pneumatischer Arbeitszylinder ausgeführt mit einem Stößel 11. Das Stellelement 10 ist derart am Reaktorgehäuse 3 angeordnet, dass der Stößel 11 durch die Öffnung 6 in das Reaktorgehäuse 3 geführt ist und die obere, der Öffnung 6 zugewandte Begrenzungsscheibe 9 kontaktieren kann. Es ist auch denkbar, dass an der Öffnung 6 ein nicht dargestelltes Deckelelement vorgesehen ist, das eine entsprechende Durchgangsöffnung aufweist, durch die der Stößel 11, insbesondere abgedichtet, in das Reaktorgehäuse 3 hineingeführt ist. Das Stellelement 10 ist ein lineares Stellelement und kann eine Stellbewegung entlang der Bewegungsrichtung 12 ausführen.

Die Vorrichtung 1 weist eine externe Wärmeeinheit 13 auf, die insbesondere in dem Bereich des Reaktorgehäuses 3 angeordnet ist, in dem sich das Trägermaterial 2 und/oder das Katalysatormaterial 8 befinden. Gemäß dem gezeigten Ausführungsbeispiel ist die externe Wärmeeinheit 13 mantelförmig ausgeführt und an einer Außenseite des Reaktorgehäuses 3, insbesondere vollumfänglich angeordnet.

Nachfolgend wird ein Verfahren zum Freisetzen von Wasserstoffgas aus dem Trägermaterial LOHC in der Vorrichtung 1 näher erläutert.

Zum Durchführen der Freisetzungsreaktion wird das Reaktorgehäuse 3 mittels der externen Wärmeeinheit 13 erwärmt.

Bei einer Temperatur von 300° C wird durch das Kontaktieren des Trägermaterials 2 mit dem Katalysatormaterial 8 Wasserstoffgas freigesetzt. Das freigesetzte Wasserstoffgas wird über die obere Öffnung 6 abgeführt und kann einer weiteren Verwendung zur Verfügung gestellt werden.

Die Freisetzung wird beendet, insbesondere indem die Zufuhr von Wärme mittels der externen Wärmeeinheit 13, beendet wird. Bevor die Freisetzungsreaktion in der Vorrichtung 1 wiederholt wird, wird mittels des Stellelements 10 ein mechanischer Impuls auf das Katalysatormaterial 8 ausgeübt. Dazu wird das Stellelement 10 ausgehend von der in Fig. 1 gezeigten Anordnung derart aktiviert, dass der Stößel 11 entlang der Gehäuse-Längsachse 4, gemäß Fig. 1 nach unten, zu dem Katalysatormaterial 8 hin verlagert wird. Durch das Aufschlagen des Stößels 11 auf die obere Begrenzungsscheibe 9 wird ein ruckartiger Stoß auf das Katalysatormaterial 8 ausgeübt. Durch diesen Stoß werden die Katalysatorteilchen bewegt und Gasblasen aus den Poren der Katalysatorteilchen herausgelöst. Dadurch wird das Katalysatormaterial 8 reaktiviert und kann für eine erneute Freisetzungsreaktion genutzt werden. Das Katalysatormaterial 8 wird durch das Lösen der Gasblasen aus den Poren reaktiviert.

Das Kraftspeicherelement 7 dient einerseits zur Absorption des mechanischen Impulses und andererseits zur Rückverlagerung des Katalysatormaterials 8 in die ursprüngliche, in Fig. 1 gezeigte Position.

Die in Fig. 1 gezeigte Vorrichtung eignet sich insbesondere für die Durchführung des Verfahrens im Batchbetrieb.

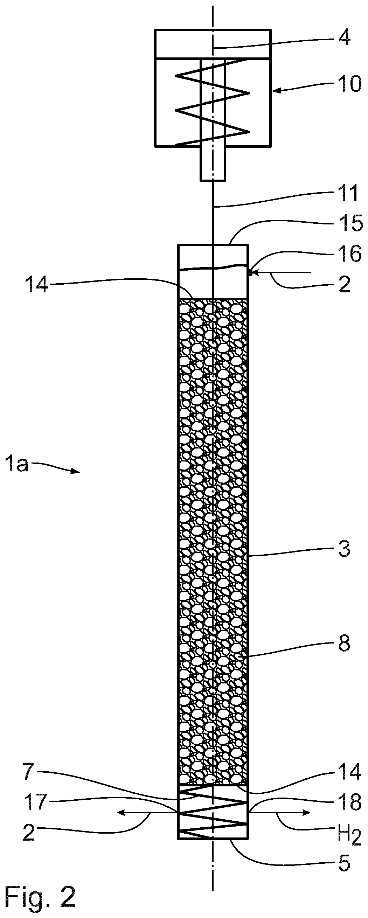

Im Folgenden wird unter Bezugnahme auf Fig. 2 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Ein Unterschied gegenüber dem vorherigen Ausführungsbeispiel besteht darin, dass das Katalysatormaterial 8 in einem Katalysatorbehälter 14 angeordnet ist. Der Katalysatorbehälter 14 ist gemäß dem gezeigten Ausführungsbeispiel als Metallkorb ausgeführt, wobei Öffnungen in dem Korbgeflecht ein Durchströmen des Katalysatorbehälters 14 mit dem Trägermaterial 2 und/oder freigesetztem Wasserstoffgas ermöglichen.

Der Katalysatorbehälter 14 ist in sich steif. Eine Beaufschlagung des Katalysatorbehälters 14 mit dem mechanischen Impuls, der von dem Stellelement 10 ausgeführt wird, bewirkt keine Deformation des Katalysatorbehälters 14.

Ein Unterschied gegenüber dem vorherigen Ausführungsbeispiel besteht darin, dass das Reaktorgehäuse 3 an seinem oberen, dem Gehäuseboden 5 abgewandten Ende einen Gehäusedeckel 15 aufweist. Das Reaktorgehäuse 3 ist jeweils stirnseitig verschlossen. Der Stößel 11 des Stellelements 10 ist abgedichtet durch den Gehäusedeckel 15 axial verlagerbar entlang der Gehäuse-Längsachse 4 geführt.

Der Stößel 11 ist insbesondere unmittelbar mit dem Katalysatorbehälter 14 verbunden, so dass eine Verlagerung des Stößels 11 unmittelbar eine Verlagerung des Katalysatorbehälters 14 und des darin angeordneten Katalysatormaterials 8 bewirkt.

Gemäß dem gezeigten Ausführungsbeispiel ist das Kraftspeicherelement 7 als Federelement, insbesondere als Schraubenfeder, ausgeführt.

Das Reaktorgehäuse 3 weist eine Zuführöffnung 16 zum Zuführen des Trägermaterials 2 auf. Gemäß dem gezeigten Ausführungsbeispiel ist die Zuführöffnung 16 in der Zylindermantelwand des Reaktorgehäuses 3, insbesondere in einem dem Gehäusedeckel 15 benachbarten Bereich, angeordnet.

Das Reaktorgehäuse 3 weist eine erste Abführöffnung 17 zum Abführen des zumindest teilweise entladenen Trägermaterials LOHC auf.

Das Reaktorgehäuse 3 weist ferner eine zweite Abführöffnung 18 auf, um freigesetztes Wasserstoffgas aus dem Reaktorgehäuse 3 abzuführen. Es ist auch denkbar, dass nur eine einzige Abführöffnung vorgesehen ist, über die das zumindest teilweise entladene Trägermaterial und das Wasserstoffgas gemeinsam abgeführt werden können.

Vorteilhaft ist eine Anordnung der Vorrichtung 1 insbesondere derart, dass die Gehäuse-Längsachse 4 horizontal orientiert und die zweite Abführöffnung 18 an einer Oberseite des Reaktorgehäuses 3 angeordnet ist. Die Abführung des freigesetzten Wasserstoffgases über die zweite, dann obenliegende Abführöffnung 18 ist dadurch vereinfacht.

Nachfolgend wird ein Verfahren zum Betrieb der Vorrichtung 1a näher erläutert.

Nach dem Erwärmen des Trägermaterials 2 mittels der in Fig. 2 nicht näher dargestellten externen Wärmeeinheit wird Wasserstoffgas aus dem Trägermaterial freigesetzt. Das freigesetzte Wasserstoffgas kann über die zweite Abführöffnung 18 abgeführt werden. Das zumindest teilweise entladene Trägermaterial kann über die erste Abführöffnung 17 aus dem Reaktorgehäuse 2 abgeführt werden. Neues, zumindest teilweise beladendes Trägermaterial 2 kann über die Zuführöffnung 16 dem Reaktorgehäuse 3 zugeführt werden. Um ein Absinken der Aktivität des Katalysatormaterials 8 zu vermeiden, wird mit dem Stellelement 10 ein mechanischer Impuls auf das Katalysatormaterial 8 ausgeübt. Dazu wird eine Stellbewegung von dem Stellelement 10 mittels des Stößels 11 unmittelbar auf den Katalysatorbehälter 14 übertragen.

Dadurch, dass der Katalysatorbehälter 14 steif ausgeführt ist, wird die Stellbewegung des Stellelements 10 gleichermaßen auf das gesamte Katalysatormaterial 8, also auf die Schüttung insgesamt, ausgeübt. Es ist insbesondere vermieden, dass das Katalysatormaterial 8 in dem Bereich, in dem der Stößel 11 des Stellelements 10 an dem Katalysatormaterial angreift, zumindest bereichsweise verdichtet wird und somit die Stellbewegung kompensiert. Dadurch ist gewährleistet, dass alle Katalysatorteilchen innerhalb des Katalysatorbehälters 14 bewegt und dadurch reaktiviert werden. Die Vorrichtung 1a gemäß Fig. 2 eignet sich insbesondere für eine kontinuierliche Freisetzungsreaktion.

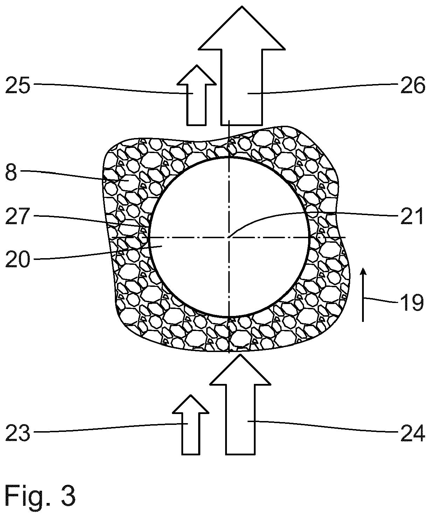

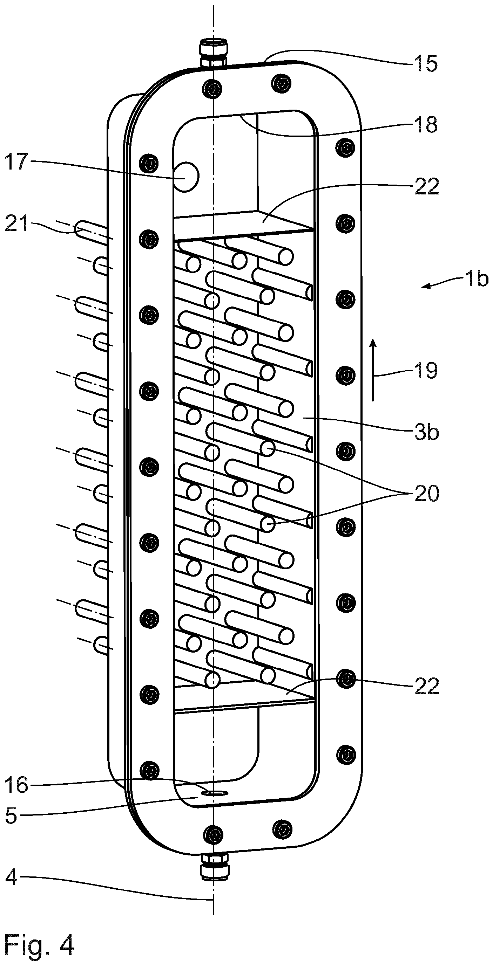

Im Folgenden wird unter Bezugnahme auf Fig. 3 und 4 eine weitere Ausführungsform beschrieben. Konstruktiv identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Die Vorrichtung 1b weist ein im Wesentlichen quaderförmiges Reaktorgehäuse 3b auf. Das Reaktorgehäuse 3b ist insbesondere derart ausgerichtet, dass die Gehäuse-Längsachse 4 vertikal orientiert ist. Bei dem Reaktorgehäuse 3b ist die Zuführöffnung 16 an einer unteren Stirnwand angeordnet. Die untere Stirnwand bildet den Gehäuseboden 5. Die erste Abführöffnung 17 zum Abführen von Trägermaterial 2 ist an einer Seitenwand des Reaktorgehäuses 3b, insbesondere in einem oberen Bereich des Reaktorgehäuses 3b, insbesondere der Zuführöffnung 16 abgewandt, angeordnet. Die zweite Abführöffnung 18 ist an der oberen Stirnwand, also am Gehäusedeckel 15, angeordnet. Die erste Abführöffnung 17 kann auch an der oberen, der unteren Stirnwand gegenüberliegenden Stirnwand, die insbesondere den Gehäusedeckel 15 bildet, angeordnet sein.

Die Zuführöffnung 16 und die Abführöffnungen 17, 18 geben eine Fluidströmungsrichtung 19 vor, die entlang der Gehäuse-Längsachse 4 orientiert ist. Die Fluidströmungsrichtung 19 ist insbesondere vertikal nach oben gerichtet.

Ein Unterschied gegenüber den vorherigen Ausführungsformen besteht darin, dass in dem Reaktorgehäuse 3b mehrere, gemäß dem gezeigten Ausführungsbeispiel zweiundvierzig, Wärmeelemente 20 angeordnet sind. Es können auch mehr oder weniger als zweiundvierzig Wärmeelemente 20 vorgesehen sein. Die Wärmeelemente 20 sind jeweils stabförmig, rohrförmig oder plattenförmig ausgeführt. Die Wärmeelemente 20 weisen jeweils eine Längsachse 21 auf, die senkrecht zu der Fluidströmungsrichtung 19 orientiert ist. Die Wärmeelemente 20 sind in dem Reaktorgehäuse 3b in Form eines regelmäßigen Rasters angeordnet. Insbesondere sind die Wärmeelemente 20 beabstandet zueinander angeordnet. Die jeweiligen Längsachsen 21 der Wärmeelemente 20 sind insbesondere senkrecht zu der Gehäuse-Längsachse 4 des Reaktorgehäuses 3b orientiert.

In Fig. 4 ist das Katalysatormaterial 8 aus Darstellungsgründen nicht vollständig dargestellt. Dargestellt sind eine obere und eine untere Deckfläche 22 der Schüttung des Katalysatormaterials 8. Insbesondere ist erkennbar, dass die erste Abführöffnung 17 oberhalb der oberen Deckfläche 22 angeordnet ist. Die obere Abführöffnung 17 ist nicht durch das Katalysatormaterial 8 abgedeckt.

Alle Wärmeelemente 20 befinden sich gemäß dem gezeigten Ausführungsbeispiel innerhalb der Schüttung des Katalysatormaterials 8. Die Wärmeelemente 20 sind insbesondere in dem Katalysatormaterial 8 eingebettet.

Die rohrförmig bzw. stabförmig ausgeführten Wärmeelemente 20 weisen eine äußere Wärmeübertragungsfläche 27 auf, die gemäß der Ausführung in dem gezeigten Ausführungsbeispiel zylinderförmig ausgeführt ist. Es ist auch möglich, dass die Wärmeelemente 20 eine andere Außenkontur aufweisen, insbesondere eine viereckige, insbesondere quadratische, sechseckige oder achteckige Kontur.

Mit den Wärmeelementen 20 kann Wärme unmittelbar an das Katalysatormaterial 8 im Reaktorgehäuse 3b abgegeben werden.

Die vorteilhaften Wärmeübertragungsbedingungen sind insbesondere aus Fig. 3 ersichtlich, in der sehr schematisch die Strömungsverhältnisse dargestellt sind. Fig. 3 zeigt ein Wärmeelement 20 im Querschnitt, also in einer Ebene senkrecht zur Längsachse 21. Symbolisch dargestellt ist auch das das Wärmeelement 20 umgebende Katalysatormaterial 8. Das von dem Wärmeelement 20 erwärmte Katalysatormaterial 8 wird von dem Trägermaterial angeströmt. Dies ist durch den Strömungspfeil 23 symbolisiert. Zudem wird das Katalysatormaterial 8 von Wasserstoffgas angeströmt, symbolisiert durch den Strömungspfeil 24. Es handelt sich dabei entweder um bereits in dem Reaktorgehäuse 3b freigesetztes Wasserstoffgas und/oder um Wasserstoffgas, das, insbesondere physikalisch gelöst, in dem Trägermaterial vorliegt.

Durch das Kontaktieren des Trägermaterials 2 mit dem Katalysatormaterial 8 und die Erwärmung des Katalysatormaterials 8 an der Wärmeübertragungsfläche 27 wird Wasserstoffgas aus dem Trägermaterial freigesetzt. Die Strömung des zumindest teilweise entladenen Trägermaterials ist durch den Strömungspfeil 25 symbolisiert. Der Strömungspfeil 26 symbolisiert den Wasserstoffgasstrom. Dadurch, dass zusätzlich Wasserstoffgas aus dem das Wärmeelement 20 umgebenden Katalysatormaterial 8 freigesetzt worden ist, ist der Strömungspfeil 26 größer dargestellt als der Strömungspfeil 24. Dadurch, dass die Wärmeübertragungsfläche 27 quer und insbesondere senkrecht zu der Fluidströmungsrichtung 19 orientiert ist, ist eine vorteilhafte Umströmung der Wärmeübertragungsfläche 27 möglich. Die Wärmeübertragung von dem Wärmeelement 20 auf das Trägermaterial 2 und insbesondere auf das Katalysatormaterial 8 ist dadurch verbessert. Insbesondere ermöglicht diese Ausgestaltung einerseits einen konvektiven Wärmetransport und andererseits eine gleichzeitige Wasserstofffreisetzung.

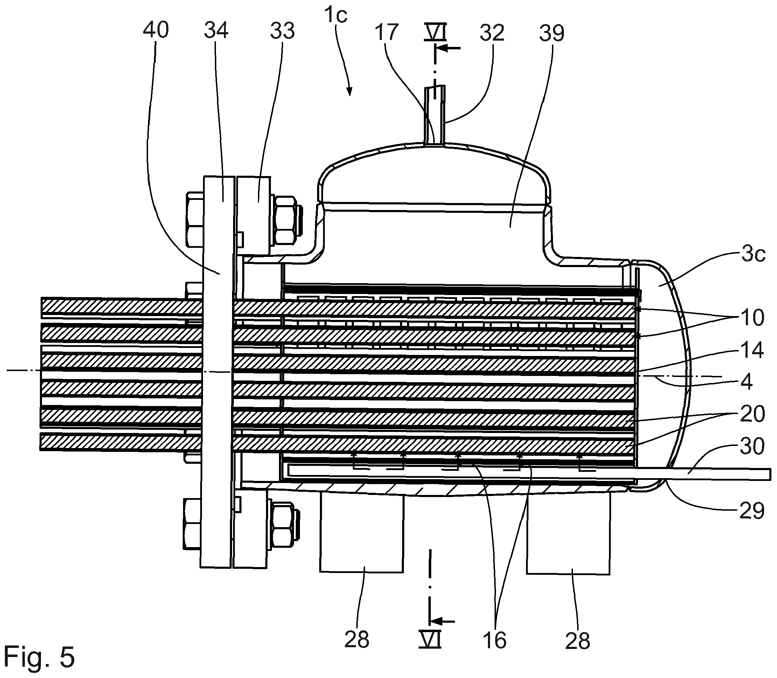

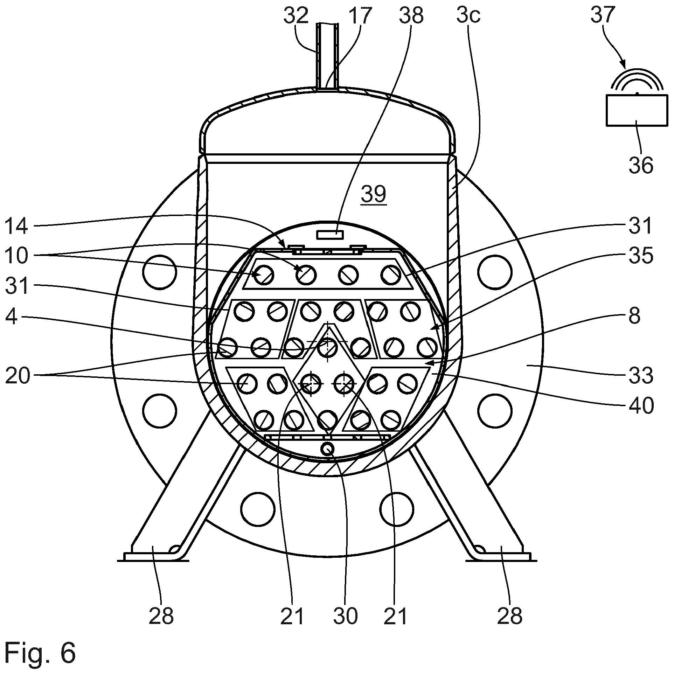

Im Folgenden wird untere Bezugnahme auf Fig. 5 und 6 ein drittes Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Bei der Vorrichtung 1c ist das Reaktorgehäuse 3c im Wesentlichen zylinderförmig ausgeführt. Das Reaktorgehäuse 3c ist mittels Stützfüßen 28 auf dem Untergrund abgestellt und derart orientiert, dass die Gehäuse-Längsachse 4 horizontal orientiert ist. An der in Fig. 5 rechts dargestellten Stirnseite ist an dem Reaktorgehäuse 3c eine Durchgangsöffnung 29 angeordnet, durch die ein Verteilerrohr 30 in das Reaktorgehäuse 3c geführt ist. Das Verteilerrohr 30 erstreckt sich parallel zur Gehäuse-Längsachse 4 in einem unteren Bereich durch das Reaktorgehäuse 3c und ist insbesondere unterhalb des Katalysatorbehälters 14 angeordnet. Das Verteilerrohr 30 weist entlang der Gehäuse-Längsachse 4 beabstandet zueinander angeordnete Ausströmöffnungen auf, über die beladenes Trägermaterial, das als LOHC-H bezeichnet wird, in das Reaktorgehäuse 3c zugeführt werden kann. Die Ausströmöffnungen bilden jeweils eine Zuführöffnung 16.

Es können auch mehrere Verteilerrohre 30, insbesondere zwei Verteilerrohre 30, in dem Reaktorgehäuse 3c angeordnet sein. Insbesondere ist dadurch die verteilte und gleichmäßige Zuführung des beladenen Trägermaterials verbessert. Es ist auch denkbar, dass das Verteilerrohr 30 nichtlinear ausgeführt und insbesondere mäanderförmig im Bodenbereich des Reaktorgehäuses 3c angeordnet und/oder verzweigt ausgeführt ist.

Bezogen auf die Gehäuse-Längsachse 4 ist den Zuführöffnungen 16 diametral gegenüberliegend ein Ausströmrohr 32 angeordnet, das an die Abführöffnung 17 des Reaktorgehäuses 3c angeschlossen ist.

Der Katalysatorbehälter 14 weist eine im Wesentlichen sechseckförmige Außenkontur auf, die durch mehrere, miteinander verbundene Seiten 31 gebildet wird. Die Seitenwände 31 sind insbesondere derart ausgeführt, dass das Katalysatormaterial 8 zuverlässig innerhalb des Katalysatorbehälters 14 angeordnet ist. Die Seitenwände 31, insbesondere die oberen, der Abführöffnung 17 zugewandten Seitenwände 31 und insbesondere die unteren, den Zuführöffnungen 16 zugewandten Seitenwände 31 sind insbesondere fluiddurchlässig ausgeführt. Dadurch ist gewährleistet, dass das Trägermaterial und/oder freigesetztes Wasserstoffgas die Seitenwände 31 durchströmen kann.

An der der Durchgangsöffnung 29 gegenüberliegenden Stirnseite weist das Reaktorgehäuse 3c einen Verbindungsflansch 33 auf, an dem eine Halterung 34 befestigt ist. Die Halterung 34 ist flanschartig ausgeführt und weist eine, insbesondere integrierte, Halteplatte 40 auf, an der Funktionselemente gehalten sind. Gemäß dem gezeigten Ausführungsbeispiel sind an der Halteplatte 40 Wärmeelemente 20 in Form von elektrischen Heizstäben und Stellelemente 10 in Form von Piezo-Stoßgeneratoren gehalten. Dazu kann die Halteplatte 40 mit mehreren Durchgangsöffnungen ausgeführt sein, durch die hindurch die Wärmeelemente 20 und/oder die Stellelemente 10 in das Reaktorgehäuse, insbesondere in den Katalysatorbehälter 14, eingeführt und darin gehalten sind. Die Wärmeelemente 20 und/oder die Stellelemente 10 sind durch die Halteplatte 40 hindurch abgedichtet in das Reaktorgehäuse 3c eingeführt. Es ist möglich, die Anzahl der Wärmeelemente 20 und der Stellelemente 10 veränderlich festzulegen und insbesondere das Verhältnis von Wärmeelementen 20 zu Stellelementen 10 zu verändern.

Es ist möglich, an der Halteplatte 40 ausschließlich Wärmeelemente 20 oder Stellelemente 10 anzuordnen.

Es ist zusätzlich oder alternativ möglich, an der gegenüberliegenden Stirnseite, an der gemäß dem gezeigten Ausführungsbeispiel die Durchgangsöffnung 29 angeordnet ist, einen weiteren Verbindungsflansch vorzusehen, um mittels einer zusätzlichen Halterung 34 weitere Funktionselemente an dem Reaktorgehäuse 3c vorzusehen. So ist es insbesondere möglich, dass an dem in Fig. 5 dargestellten Verbindungsflansch 33 ausschließlich Wärmeelemente 20 befestigt und in das Reaktorgehäuse 3c eingeführt sind und mit einem zusätzlichen, gegenüberliegenden Verbindungsflansch, der in Fig. 5 nicht dargestellt ist, ausschließlich Stellelemente 10 befestigt und in das Reaktorgehäuse 3c eingeführt sind.

Die Wärmelemente 20 sind insbesondere in einem regelmäßigen Raster angeordnet, wie dies in Fig. 6 dargestellt ist. Insbesondere sind die Wärmeelemente 20 derart zwischen Zuführöffnung 16 und Abführöffnung 17 angeordnet, dass das über die Zuführöffnung 16 zugeführte, beladene Trägermaterial LOHC-H zumindest ein Wärmeelement 20 umströmen muss, um zu der Abführöffnung 17 zu gelangen. Insbesondere ist mindestens ein Wärmeelement 20 auf der direkten Verbindungslinie einer Zuführöffnung 16 zu der Abführöffnung 17 angeordnet. Dadurch ist die Wärmeübertragung verbessert. Es ist gewährleistet, dass das Trägermaterial zuverlässig mindestens ein Wärmeelement 20 umströmt.

Anstelle der elektrischen Heizstäbe kann als Wärmeelement auch ein Wärmeübertragerrohr dienen, in dem Thermalöl und/oder ein anderes Wärmeübertragungsmedium gefördert werden, wobei das Thermalöl und/oder das Wärmeübertragungsmedium außerhalb des Reaktorgehäuses 3c erhitzt worden sind.

Alternativ können die Wärmeübertragerrohre auch zum Verbrennen eines Kraftstoffs, insbesondere von Wasserstoff, dienen. Es handelt sich dabei insbesondere um eine katalytische Verbrennung, wobei insbesondere an einer Innenfläche des Wärmeübertragerrohrs ein Katalysatormaterial angebracht ist, der den Kraftstoff und/oder Wasserstoff bevorzugt verbrennen lässt. Der in den Wärmeübertragerrohren zu verbrennende Wasserstoff kann insbesondere direkt aus dem Reaktorgehäuse 3c entnommen werden.

Alternativ ist es auch möglich, in den Wärmeübertragerrohren eine katalytische Oxidationsreaktion, insbesondere des Trägermaterials und insbesondere der zumindest teilweise entladenen Form des Trägermaterials, das aus dem Reaktorgehäuse 3c abgegeben wird. Die Oxidationsreaktion ist exotherm und kann insbesondere vollständig unter Bildung von Kohlenstoffdioxid (CO₂) oder zumindest partiell erfolgen, so dass das flüssige Oxidationsprodukt, insbesondere zu einem späteren Zeitpunkt, wieder reduziert und als Trägermaterial wiederverwendet werden kann. Die Oxidationsreaktion und eine, insbesondere später durchgeführte, Reduktion sind reversibel und ermöglichen ein geschlossenes Kreislaufsystem des Trägermaterials.

Insbesondere wurde gefunden, dass es vorteilhaft ist, die Wärmeelemente 20 zu mehreren Wärmeelementgruppen 35 zu gruppieren. Die zu Wärmeelementgruppen zusammengefassten Wärmeelemente 20 sind in Fig. 6 durch entsprechende Umrandungen symbolisiert. Dabei erfolgt die Gruppierung der Wärmeelemente 20 ausschließlich steuerungstechnisch. Insbesondere sind die zu einer Wärmeelementgruppe 35 gruppierten Wärmeelemente 20 nicht mechanisch miteinander verbunden. Die einzelnen Wärmeelementgruppen 35 sind insbesondere mit einer rein schematisch dargestellten Steuerungs-/Regelungseinheit in Signalverbindung. Die Signalverbindung kann kabellos oder kabelgebunden erfolgen. Die kabellose Signalverbindung, insbesondere mittels Funk, ist in Fig. 6 durch ein Symbol 37 dargestellt. Insbesondere ist es möglich, die einzelnen Wärmeelemente 20 und/oder die Wärmeelementgruppen 35 mittels der Steuerungs-/Regelungseinheit 36 derart anzusteuern, dass sich eine homogene Temperaturverteilung über das Katalysatormaterial 8 ergibt.

Die Steuerungs-/Regelungseinheit 36 ist ferner mit einem Sensor 38 in Signalverbindung, wobei der Sensor 38 insbesondere zur Erfassung eines Betriebszustands der Vorrichtung 1c dient, insbesondere der Aktivität des Katalysatormaterials 8. Der Sensor 38 ist innerhalb des Reaktorgehäuses 3c angeordnet. In Abhängigkeit der Ausführung des Sensors 38 kann dieser auch außerhalb des Reaktorgehäuses 3c angeordnet sein.

In dem Reaktorgehäuse ist eine Gas-/Schaumzone 39 angeordnet. Die Gas-/Schaumzone 39 ist insbesondere der Abführöffnung 17 unmittelbar vorgeordnet. Die Gas-/Schaumzone 39 ist insbesondere oberhalb des Katalysatormaterials 8 und insbesondere oberhalb des Katalysatorbehälters 14 angeordnet. Trägermaterial und freigesetztes Wasserstoffgas, das über die Abführöffnung 17 aus dem Reaktorgehäuse 3c abgeführt werden sollen, müssen die Gas-/Schaumzone 39 durchströmen.

In der Gas-/Schaumzone 39 wird der Schaum insbesondere aus zumindest teilweise dehydriertem Trägermaterial gebildet. Freigesetztes Wasserstoffgas kann zumindest teilweise dehydriertes Trägermaterial aus der Gas-/Schaumzone mitreißen. Die Gas-/Schaumzone 39 gewährleistet eine zuverlässige Phasentrennung zwischen flüssigen und gas-/dampfförmigen Anteilen der Reaktionsprodukte in dem Reaktorgehäuse 3c. Das Risiko, dass unbeabsichtigt flüssige Bestandteile aus dem Reaktorgehäuse 3c über die Abführöffnung 17 ausgetragen werden, ist reduziert. Zumindest teilweise dehydriertes Trägermaterial wird aus der Gas-/Schaumzone 39 unmittelbar zur erneuten Reaktion und/oder Verdampfung in das Reaktorgehäuse 3c rückgeführt bzw. verbleibt unmittelbar in dem Reaktorgehäuse 3c.

Es ist auch möglich, auf die Gas-/Schaumzone 39 zu verzichten.

Gemäß dem gezeigten Ausführungsbeispiel ist die Fluidströmungsrichtung 19 senkrecht zu den Längsachsen 21 der Wärmeelemente 20 orientiert. Insbesondere ist die Fluidströmungsrichtung 19 vertikal orientiert. Es wurde gefunden, dass es auch möglich ist, die Wärmeelemente 20 derart anzuordnen, dass ihre Längsachsen 21 gegenüber der Fluidströmungsrichtung 19 geneigt angeordnet sind.

## Patentansprüche

1. Verfahren zum katalytischen Freisetzen eines Gases aus einem Trägermaterial umfassend die Verfahrensschritte
- Bereitstellen eines Reaktorgehäuses (3; 3b; 3c), in dem Katalysatormaterial (8) in Form einer Schüttung von Katalysatorteilchen angeordnet ist,
- Freisetzen des Gases von dem Trägermaterial durch Kontaktieren des Trägermaterials mit dem Katalysatormaterial (8),
- Reaktivieren der Katalysatorteilchen durch Bewegen der Katalysatorteilchen in dem Reaktorgehäuse (3; 3b; 3c), wobei das Bewegen zeitlich gesteuert nach Ablauf eines veränderlich festlegbaren Zeitintervalls erfolgt.

2. Verfahren gemäß Anspruch 1, **dadurch gekennzeichnet, dass** das Bewegen durch Aufbringen eines mechanischen Impulses mittels eines Stellelements (10) und/oder mittels einer Impulsquelle erfolgt, wobei das Stellelement (10) und/oder die Impulsquelle mechanisch mit dem Reaktorgehäuse (3; 3b; 3c) und/oder mit dem Katalysatormaterial (8) gekoppelt ist.

3. Verfahren gemäß einem der vorstehenden Ansprüche, **dadurch gekennzeichnet, dass** das Bewegen durch Fördern des Katalysatormaterials (8) mittels eines Förderelements, insbesondere innerhalb der Reaktorgehäuses (3; 3b; 3c), erfolgt.

4. Verfahren gemäß einem der vorstehenden Ansprüche, **dadurch gekennzeichnet, dass** das Bewegen durch Aufbringen einer Druckänderung im Reaktorgehäuse (3; 3b; 3c) erfolgt.

5. Verfahren gemäß einem der vorstehenden Ansprüche, **dadurch gekennzeichnet, dass** das Bewegen, regelmäßig nach Ablauf des veränderlich festlegbaren Zeitintervalls erfolgt.

6. Verfahren gemäß einem der vorstehenden Ansprüche, **dadurch gekennzeichnet, dass** das Bewegen sensorgesteuert erfolgt.

7. Verfahren gemäß einem der vorstehenden Ansprüche, **gekennzeichnet durch** Erwärmen des Katalysatormaterials (8) mittels eines im Reaktorgehäuse (3; 3b; 3c) angeordneten Wärmeelements (20), das eine Wärmeübertragungsfläche (27) aufweist.

8. Verfahren gemäß Anspruch 7, **dadurch gekennzeichnet, dass** das Wärmeelement (20) eine Längsachse (21) aufweist, die quer, insbesondere senkrecht, zu einer Fluidströmungsrichtung (19) des Trägermaterials im Reaktorgehäuse (3; 3b; 3c) orientiert ist.

9. Vorrichtung zum katalytischen Freisetzen eines Gases aus einem Trägermaterial umfassend
- ein Reaktorgehäuse (3; 3b; 3c), in dem Katalysatormaterial (8) als Schüttung von Katalysatorteilchen angeordnet ist, wobei das Reaktorgehäuse (3; 3b; 3c) umfasst
-- eine Zuführöffnung (6; 16) zum Zuführen des Trägermaterials in das Reaktorgehäuse (3; 3b; 3c),
-- eine Abführöffnung (6;17,18) zum Abführen des freigesetzten Gases und/oder des Trägermaterials aus dem Reaktorgehäuse (3; 3b; 3c),
- ein Bewegungselement (10) zum Bewegen der Katalysatorteilchen in dem Reaktorgehäuse (3; 3b; 3c),
- eine Steuerungs-/Regelungseinheit (36), die mit dem Bewegungselement (10) in Signalverbindung steht,
**gekennzeichnet durch** mindestens einen Sensor (38) zum Erfassen eines Betriebszustands der Vorrichtung (1c), wobei der Sensor (38) mit der Steuerungs-/Regelungseinheit (36) in Signalverbindung steht für eine sensorgesteuerte Reaktivierung des Katalysatormaterials (8).

10. Vorrichtung gemäß Anspruch 9, **dadurch gekennzeichnet, dass** das Bewegungselement als Stellelement (10) und/oder als Impulsquelle ausgeführt ist, wobei das Stellelement (10) und/oder die Impulsquelle mechanisch mit dem Reaktorgehäuse (3; 3b; 3c) und/oder mit dem Katalysatormaterial (8) gekoppelt ist.

11. Vorrichtung gemäß Anspruch 9 oder 10, **dadurch gekennzeichnet, dass** das Bewegungselement als Förderelement ausgeführt ist, das insbesondere innerhalb der Reaktorgehäuses (3; 3b; 3c) angeordnet ist.

12. Vorrichtung gemäß einem der Ansprüche 9 bis 11, **dadurch gekennzeichnet, dass** das Bewegungselement als Druckgenerator ausgeführt ist.

13. Vorrichtung gemäß einem der Ansprüche 9 bis 12, **gekennzeichnet durch** ein zumindest teilweise im Reaktorgehäuse (3b; 3c) angeordnetes Wärmeelement (20), das eine Wärmeübertragungsfläche (27) zum Erwärmen des Katalysatormaterials (8) aufweist.

14. Vorrichtung gemäß Anspruch 13, **dadurch gekennzeichnet, dass** das Wärmeelement (20) eine Längsachse (21) aufweist, die quer, insbesondere senkrecht, zu einer Fluidströmungsrichtung (19) des Trägermaterials im Reaktorgehäuse (3; 3b; 3c) orientiert ist.

## Claims

1. Method for catalytically releasing a gas from a carrier material, comprising the method steps of:
- providing a reactor housing (3; 3b; 3c) in which catalyst material (8) is arranged as catalyst particles in bulk,
- releasing the gas from the carrier material by contacting the carrier material with the catalyst material (8),
- reactivating the catalyst particles by moving the catalyst particles in the reactor housing (3; 3b; 3c), wherein the movement is effected in a time-controlled manner after expiry of a variably definable time interval.

2. Method as claimed in claim 1, **characterised in that** the movement is effected by applying a mechanical impulse by means of an actuating element (10) and/or by means of an impulse source, wherein the actuating element (10) and/or the impulse source is mechanically coupled to the reactor housing (3; 3b; 3c) and/or to the catalyst material (8).

3. Method as claimed in any one of the preceding claims, **characterised in that** the movement is effected by conveying the catalyst material (8) by means of a conveying element, in particular within the reactor housing (3; 3b; 3c).

4. Method as claimed in any one of the preceding claims, **characterised in that** the movement is effected by applying a pressure change in the reactor housing (3; 3b; 3c).

5. Method as claimed in any one of the preceding claims, **characterised in that** the movement is effected uniformly after expiry of the variably definable time interval.

6. Method as claimed in any one of the preceding claims, **characterised in that** the movement is effected in a sensor-controlled manner.

7. Method as claimed in any one of the preceding claims, **characterised by** heating the catalyst material (8) by means of a heat element (20) which is arranged in the reactor housing (3; 3b; 3c) and has a heat transmission surface (27).

8. Method as claimed in claim 7, **characterised in that** the heat element (20) has a longitudinal axis (21) which is oriented transversely, in particular perpendicularly, to a fluid flow direction (19) of the carrier material in the reactor housing (3; 3b; 3c).

9. Device for catalytically releasing a gas from a carrier material, comprising
- a reactor housing (3; 3b; 3c) in which catalyst material (8) is arranged as catalyst particles in bulk, wherein the reactor housing (3; 3b; 3c) comprises
-- a supply opening (6; 16) for supplying the carrier material to the reactor housing (3; 3b; 3c),
-- a discharge opening (6; 17, 18) for discharging the released gas and/or the carrier material from the reactor housing (3; 3b; 3c),
-- a movement element (10) for moving the catalyst particles in the reactor housing (3; 3b; 3c),
-- a control/regulating unit (36) which is in signal communication with the movement element (10),
**characterised by** at least one sensor (38) for detecting an operating state of the device (1c), wherein the sensor (38) is in signal communication with the control/regulating unit (36) for a sensor-controlled reactivation of the catalyst material (8).

10. Device as claimed in claim 9, **characterised in that** the movement element is designed as an actuating element (10) and/or as an impulse source, wherein the actuating element (10) and/or the impulse source is mechanically coupled to the reactor housing (3; 3b; 3c) and/or to the catalyst material (8).

11. Device as claimed in claim 9 or 10, **characterised in that** the movement element is designed as a conveying element which is arranged in particular within the reactor housing (3; 3b; 3c).

12. Device as claimed in any one of claims 9 to 11, **characterised in that** the movement element is designed as a pressure generator.

13. Device as claimed in any one of claims 9 to 12, **characterised by** a heat element (20) which is arranged at least partially in the reactor housing (3b; 3c) and has a heat transmission surface (27) for heating the catalyst material (8).

14. Device as claimed in claim 13, **characterised in that** the heat element (20) has a longitudinal axis (21) which is oriented transversely, in particular perpendicularly, to a fluid flow direction (19) of the carrier material in the reactor housing (3; 3b; 3c).

## Revendications

1. Procédé de libération catalytique d'un gaz à partir d'un matériau de support, comprenant les étapes de procédé suivantes :
- mise à disposition d'une enceinte de réacteur (3 ; 3b ; 3c) dans laquelle est disposé un matériau catalyseur (8) sous la forme d'une charge de particules de catalyseur,
- libération du gaz du matériau de support par mise en contact du matériau de support avec le matériau catalyseur (8),
- réactivation des particules de catalyseur par déplacement des particules de catalyseur dans l'enceinte de réacteur (3 ; 3b ; 3c), le déplacement étant commandé dans le temps après écoulement d'un intervalle de temps pouvant être fixé de manière variable.

2. Procédé selon la revendication 1, **caractérisé en ce que** le déplacement est effectué par application d'une impulsion mécanique au moyen d'un élément de réglage (10) et/ou au moyen d'une source d'impulsions, l'élément de réglage (10) et/ou la source d'impulsions étant couplés mécaniquement à l'enceinte de réacteur (3 ; 3b ; 3c) et/ou au matériau catalyseur (8).

3. Procédé selon l'une des revendications précédentes, **caractérisé en ce que** le déplacement est effectué par transport du matériau catalyseur (8) au moyen d'un élément de transport, en particulier à l'intérieur de l'enceinte de réacteur (3 ; 3b ; 3c).

4. Procédé selon l'une des revendications précédentes, **caractérisé en ce que** le déplacement est effectué par application d'une variation de pression dans l'enceinte de réacteur (3 ; 3b ; 3c).

5. Procédé selon l'une des revendications précédentes, **caractérisé en ce que** le déplacement est effectué régulièrement après écoulement de l'intervalle de temps pouvant être fixé de manière variable.

6. Procédé selon l'une des revendications précédentes, **caractérisé en ce que** le déplacement est commandé par capteur.

7. Procédé selon l'une des revendications précédentes, **caractérisé par** le chauffage du matériau catalyseur (8) au moyen d'un élément chauffant (20) disposé dans l'enceinte de réacteur (3 ; 3b ; 3c) et présentant une surface de transfert de chaleur (27).

8. Procédé selon la revendication 7, **caractérisé en ce que** l'élément chauffant (20) présente un axe longitudinal (21) qui est orienté transversalement, en particulier perpendiculairement, à une direction d'écoulement de fluide (19) du matériau de support dans l'enceinte de réacteur (3 ; 3b ; 3c).

9. Dispositif de libération catalytique d'un gaz à partir d'un matériau de support, comprenant :
- une enceinte de réacteur (3 ; 3b ; 3c) dans laquelle le matériau catalyseur (8) est disposé sous forme de charge de particules de catalyseur, l'enceinte de réacteur (3 ; 3b ; 3c) comprenant :
-- une ouverture d'amenée (6 ; 16) pour amener le matériau de support dans l'enceinte de réacteur (3 ; 3b ; 3c),
-- une ouverture d'évacuation (6 ; 17, 18) pour évacuer le gaz libéré et/ou le matériau de support de l'enceinte de réacteur (3 ; 3b ; 3c),
- un élément de déplacement (10) pour déplacer les particules de catalyseur dans l'enceinte de réacteur (3 ; 3b ; 3c),
- une unité de commande/régulation (36) qui est en liaison de signal avec l'élément de déplacement (10),
**caractérisé par** au moins un capteur (38) pour détecter un état de fonctionnement du dispositif (1c), le capteur (38) étant en liaison de signal avec l'unité de commande/régulation (36) pour une réactivation commandée par capteur du matériau catalyseur (8).

10. Dispositif selon la revendication 9, **caractérisé en ce que** l'élément de déplacement est réalisé sous la forme d'un élément de réglage (10) et/ou d'une source d'impulsions, l'élément de réglage (10) et/ou la source d'impulsions étant couplés mécaniquement à l'enceinte de réacteur (3 ; 3b ; 3c) et/ou au matériau catalyseur (8).

11. Dispositif selon la revendication 9 ou 10, **caractérisé en ce que** l'élément de déplacement est réalisé sous la forme d'un élément de transport, qui est en particulier disposé à l'intérieur de l'enceinte de réacteur (3 ; 3b ; 3c).

12. Dispositif selon l'une des revendications 9 à 11, **caractérisé en ce que** l'élément de déplacement est réalisé sous la forme d'un générateur de pression.

13. Dispositif selon l'une des revendications 9 à 12, **caractérisé par** un élément chauffant (20) disposé au moins partiellement dans l'enceinte de réacteur (3b ; 3c) et présentant une surface de transfert de chaleur (27) pour chauffer le matériau catalyseur (8).

14. Dispositif selon la revendication 13, **caractérisé en ce que** l'élément chauffant (20) présente un axe longitudinal (21) qui est orienté transversalement, en particulier perpendiculairement, à une direction d'écoulement de fluide (19) du matériau de support dans l'enceinte de réacteur (3 ; 3b ; 3c).
